# EUROPEAN PATENT SPECIFICATION

(11) **EP 4 079 692 B1**
(45) Date of publication and mention of the grant of the patent: **02.12.2026**
(21) Application number: 20901242.6
(22) Date of filing: 15.12.2020
(51) Int. Cl.: C01G 53/00, H01M 4/525, H01M 4/505

(54) **METHOD FOR PREPARING SECONDARY BATTERY CATHODE MATERIAL**
VERFAHREN ZUR HERSTELLUNG EINES SEKUNDÄRBATTERIE-KATHODENMATERIALS
PROCÉDÉ PERMETTANT DE PRÉPARER UN MATÉRIAU DE CATHODE DE BATTERIE RECHARGEABLE

(30) Priority: 20.12.2019 KR 20190172484
(43) Date of publication of application: 26.10.2022
(73) Proprietor: POSCO Holdings Inc., Seoul 06194 (KR); RESEARCH INSTITUTE OF INDUSTRIAL SCIENCE & TECHNOLOGY, Pohang-si, Gyeongsangbuk-do 37673 (KR); Posco Future M Co., Ltd., Pohang-si, Gyeongsangbuk-do 37918 (KR)
(72) Inventor: YOU, Ki Sung, Pohang-si, Gyeongsangbuk-do 37673 (KR)
(74) Representative: Pfenning, Meinig & Partner mbB
(86) International application number: PCT/KR2020/018387
(87) International publication number: WO 2021/125759

(56) References cited:
- KR-A- 20170 113 385
- KR-A- 20190 098 139
- KR-A- 20190 119 442
- KR-A- 20190 131 842
- KR-B1- 101 797 147
- US-A1- 2017 155 147
- TIMOSHEVSKII A. N. ET AL: "High-temperature decomposition of lithium carbonate at atmospheric pressure", vol. 46, no. 3, 1 June 2008 (2008-06-01), US, pages 414 - 421, XP093111919, ISSN: 0018-151X, Retrieved from the Internet <URL:https://link.springer.com/content/pdf/10.1134/S0018151X0803019X.pdf> DOI: 10.1134/S0018151X0803019X

## Description

### [Technical Field]

The present disclosure relates to a method of manufacturing a secondary battery cathode material.

### [Background Art]

In general, a method of manufacturing a secondary battery cathode material is a method of manufacturing a cathode material, which is a cathode active material.

In a process of firing a nickel-cobalt-manganese (NCM) cathode material of LiNiₓMn_{y}CO_{(1-x-y)}O₂ component of the conventional method of manufacturing a secondary battery cathode material, when the nickel content is 70% or less, Li₂CO₃ is mixed with a nickel-cobalt-manganese (NCM) precursor and the mixture is put into a firing furnace having a high firing temperature, and when the nickel content is 70% or more, LiOH is mixed with the NCM precursor and the mixture is put into a firing furnace having a low firing temperature.

In the conventional method of manufacturing a secondary battery cathode material for manufacturing a high nickel NCM cathode material having a nickel content of 70% or more, since LiOH has a higher price than Li₂CO₃, in order to reduce manufacturing cost and increase the charging capacity per unit volume, there is a problem in that manufacturing cost of a high nickel NCM cathode material with a reduced cobalt content and an increased nickel content increases.

US2017/0155147A1 relates to a preparation method of nickel-lithium metal composite oxide.

### [Disclosure]

The present invention has been made in an effort to provide a method of manufacturing a secondary battery cathode material capable of reducing manufacturing cost of the secondary battery cathode material by manufacturing a high nickel NCM cathode material having a nickel content of 70% or more even if Li₂CO₃ is used without using LiOH.

The present invention has been made in an effort to provide a method of manufacturing a secondary battery cathode material capable of mass-producing the secondary battery cathode material by manufacturing the secondary battery cathode material using a rotary kiln.

An exemplary embodiment of the present invention provides a method of manufacturing a secondary battery cathode material, including preparing Li₂O powder by separating CO₂ from Li₂CO₃ powder, forming a mixed powder by mixing the Li₂O powder with nickel-cobalt-manganese (NCM) precursor powder, and firing the mixed powder using a rotary kiln.

The preparing of the Li₂O powder may include charging the Li₂CO₃ powder into a firing furnace in a high-temperature atmosphere of 400°C to 800°C, and separating the CO₂ from the Li₂CO₃ powder by supplying air or oxygen into the firing furnace.

The forming of the mixed powder includes pulverizing the Li₂O powder, mixing the Li₂O powder with the NCM precursor powder, and forming the mixed powder in a form of granules or briquettes.

The forming of the mixed powder may be performed in a closed space in a nitrogen atmosphere.

The firing of the mixed powder using the rotary kiln may include charging the mixed powder into an inside of the rotary kiln in a high-temperature atmosphere of 400°C to 1000°C in which a refractory coating layer is formed on an inner surface of the rotary kiln and a spiral baffle is installed in the rotary kiln, and firing the mixed powder inside the rotary kiln.

According to an embodiment of the present invention, it is possible to provide a method of manufacturing a secondary battery cathode material capable of reducing manufacturing cost of the secondary battery cathode material by manufacturing a high nickel NCM cathode material having a nickel content of 70% or more even if Li₂CO₃ is used without using LiOH.

In addition, according to an embodiment of the present invention, it is possible to provide a method of manufacturing a secondary battery cathode material capable of mass-producing the secondary battery cathode material by manufacturing the secondary battery cathode material using a rotary kiln.

### [Description of the Drawings]

FIG. 1 is a flowchart illustrating a method of manufacturing a secondary battery cathode material according to an exemplary embodiment.
FIG. 2 is a diagram illustrating a rotary kiln used for the method of manufacturing a secondary battery cathode material.

### [Mode for Invention]

The present invention will be described more fully hereinafter with reference to the accompanying drawings, in which exemplary embodiments of the invention are shown. As those skilled in the art would realize, the described embodiments may be modified in various different ways, all without departing from the scope of the present invention.

Portions unrelated to the description will be omitted in order to obviously describe the present invention, and similar components will be denoted by the same or similar reference numerals throughout the present specification.

In addition, unless explicitly described to the contrary, the word "comprise", and variations such as "comprises" or "comprising", will be understood to imply the inclusion of stated elements but not the exclusion of any other elements.

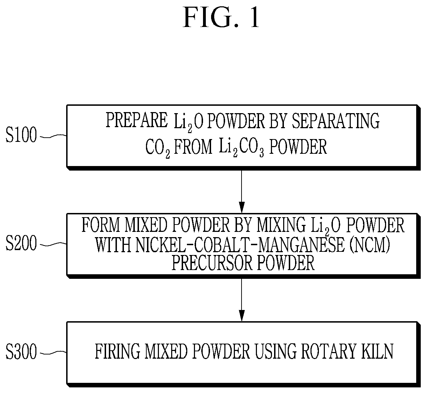

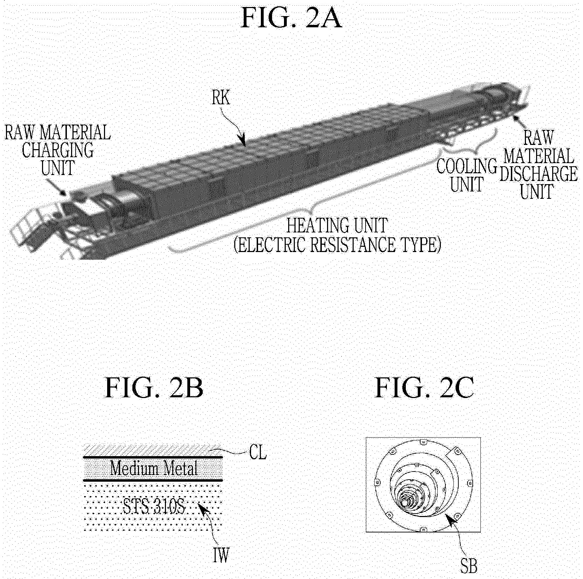

Hereinafter, a method of manufacturing a secondary battery cathode material according to an exemplary embodiment will be described with reference to FIGS. 1 and 2.

FIG. 1 is a flowchart illustrating a method of manufacturing a secondary battery cathode material according to an exemplary embodiment.

Referring to FIG. 1, first, CO₂ is separated from Li₂CO₃ powder to prepare Li₂O powder (S100).

Specifically, Li₂CO₃ powder, which has a lower price than LiOH powder, is charged into the firing furnace in a high-temperature atmosphere, and air or oxygen (O₂) gas is supplied into the firing furnace to separate CO₂ gas from Li₂CO₃ powder to prepare Li₂O powder.

Here, the firing furnace may be a rotary kiln, but is not limited thereto.

When air or oxygen gas is put into the Li₂CO₃ powder before firing, the Li₂CO₃ powder reacts with oxygen in the air or oxygen in the oxygen gas in a high-temperature atmosphere to be converted into Li₂O powder, and the reactant is carbon dioxide (CO₂) gas. In this case, since a reaction rate is determined by a partial pressure and temperature of carbon dioxide and oxygen, a certain amount of carbon dioxide gas may be discharged while supplying air or oxygen gas to keep the process temperature constant at 400°C to 800°C, and to maintain a constant partial pressure.

Next, the Li₂O powder is mixed with a nickel-cobalt-manganese (NCM) precursor powder to form a mixed powder (S200).

Specifically, the Li₂O powder is pulverized, the Li₂O powder is mixed with the NCM precursor powder, and the mixed powder is formed into the form of granules or briquettes to form the mixed powder. All steps for forming the mixed powder may be performed in a closed space in a nitrogen atmosphere to prevent the Li₂O powder from being reduced to Li₂CO₃ due to the reaction of the Li₂O powder with CO₂.

Here, the NCM precursor may include, but is not limited to, nickel-cobalt-manganese hydroxide [NiₐMn_{b}CO_{c}] (OH)₂.

After preparing the Li₂O powder by separating CO₂ from the Li₂CO₃ powder, aggregation occurs in a part of the Li₂O powder and becomes a lumped state. In this state, when the Li₂O powder is mixed with the nickel-cobalt-manganese (NCM) precursor powder, in the firing process, since it is difficult for the LiO₂ of the Li₂O powder to uniformly penetrate into the NCM precursor of the NCM precursor powder, the Li₂O powder is pulverized.

The Li₂O powder is pulverized, and then, mixed with the NCM precursor powder in a molar ratio of 1:1 or more.

In order to prevent the Li₂O powder from being reduced back to lithium carbonate (Li₂CO₃) by reacting with carbon dioxide in the air at a high temperature, the above-described pulverizing and mixing are performed in the closed space in the nitrogen atmosphere.

After mixing the Li₂O powder and the NCM precursor powder, the mixed powder in the form of granules or briquettes having a size of 1 mm to 100 mm is formed before being put into the rotary kiln. Unlike the conventional firing furnace, which is a roller hearth kiln (RHK) furnace using saggar, since a method of manufacturing a secondary battery cathode material according to an exemplary embodiment uses a firing furnace of a rotary kiln to fire a cathode material, the mixed powder is formed in the form of granules or briquettes, firstin and first-out are implemented inside the rotary kiln as the firing furnace, to minimize a deviation in firing time, prevent contamination by generation of a reactant inside the rotary kiln, and suppress a clinker from occurring inside the rotary kiln.

Next, the mixed powder is fired using the rotary kiln (S300).

FIG. 2 is a diagram illustrating the rotary kiln used for the method of manufacturing a secondary battery cathode material. FIG. 2A is a diagram illustrating the rotary kiln (RK) used for the method of manufacturing a secondary battery cathode material, FIG. 2B is a cross-sectional view illustrating a refractory coating layer (CL) formed on an inner surface (IW) of the rotary kiln (RK), and FIG. 2C is a photograph illustrating a spiral baffle (SB) provided inside the rotary kiln (RK).

Referring to FIG. 2, specifically, the mixed powder is charged into the rotary kiln (RK) in the high-temperature atmosphere in which the refractory coating layer (CL) is formed on the inner surface (IW) and the spiral baffle (SB) is provided inside the rotary kiln (RK), and the mixed powder is fired into the secondary battery cathode material, which is a cathode active material, inside the rotary kiln (RK).

The rotary kiln (RK) includes a raw material charging unit, a raw material discharge unit, a heating unit, and a cooling unit.

The mixed powder is charged into the inside of the rotary kiln (RK) through the raw material charging unit of the rotary kiln (RK), and the mixed powder charged into the rotary kiln (RK) is fired in the heating unit and cooled in the cooling unit, and is discharged to the outside through the raw material discharge unit of the rotary kiln (RK). The secondary battery cathode material, which is the cathode active material fired from the mixed powder inside the rotary kiln (RK), is discharged to the outside through the raw material discharge unit.

The mixed powder formed in the form of the briquettes or granules is put into the firing furnace, which is the rotary kiln (RK) having the spiral baffle (SB) provided inside thereof and the refractory coating layer (CL) without the saggar used in the conventional RHK furnace, in the nitrogen atmosphere. The rotary kiln (RK) rotates at a low speed and fires the mixed powder while maintaining a target firing temperature between 400°C and 1000°C.

The inside of the heating unit of the rotary kiln (RK) may be controlled by being divided into a sequentially communicating temperature increase section, temperature maintenance section, and cooling section. The reason that the cooling section is required may be to prevent a secondary reaction and generation of residual lithium due to a sudden temperature change.

In the next step, the secondary battery cathode material, which is the cathode active material in the form of the briquettes or granules fired in the firing furnace which is the rotary kiln (RK), is pulverized, the pulverized cathode active material is classified, and the de-iron process is performed on the classified cathode active material. Thereafter, when there is a lot of residual lithium in the cathode active material, a washing and drying process is performed, and when the residual lithium in the cathode active material is within a standard value, finally, a process of packaging the cathode active material through coating and heat treatment without the washing and drying process may be performed.

The secondary battery cathode material, which is the cathode active material fired in the rotary kiln (RK), is a nickel-cobalt-manganese (NCM) cathode material of LiNiₓMn_{y}CO_{(1-x-y)}O₂, and a high nickel NCM cathode material having a nickel content of 70% or more.

In the conventional method of manufacturing a secondary battery cathode material, when manufacturing the high nickel NCM cathode material having a nickel content of 70% or more, in the case where the Li₂CO₃ is mixed with the NCM precursor, in order to solve the deterioration in properties of the cathode material due to the high firing temperature for reacting with O₂, the LiOH was mixed with the NCM precursor and reacts with O₂ at a low firing temperature.

However, the conventional method of manufacturing a secondary battery cathode material has a problem in that the manufacturing cost of the secondary battery cathode material increases because the price of LiOH is higher than that of Li₂CO₃.

To solve this problem, the method of manufacturing a secondary battery cathode material according to an exemplary embodiment manufactures the high nickel NCM cathode material having a nickel content of 70% or more while solving the deterioration in properties of the cathode material by not using LiOH and O₂, converting Li₂CO₃ into Li₂O and mixing the Li₂O with the NCM precursor, and firing the mixture in the rotary kiln (RK) at a low firing temperature.

That is, the method of manufacturing a secondary battery cathode material capable of reducing manufacturing cost of the secondary battery cathode material by manufacturing a high nickel NCM cathode material having a nickel content of 70% or more even if Li₂CO₃ is used without using LiOH is provided.

In addition, the method of manufacturing a secondary battery cathode material capable of mass-producing the secondary battery cathode material by manufacturing the secondary battery cathode material using the rotary kiln (RK) is provided.

Although the exemplary embodiment of the present invention has been described in detail hereinabove, the scope of the present invention is not limited thereto. That is, several modifications and alterations made by a person of ordinary skill in the art using a basic concept of the present invention as defined in the claims fall within the scope of the present invention.

### [Description of Symbols]

Rotary Kiln (RK), Refractory coating layer(CL), Spiral baffle (SB)

## Claims

1. A method of manufacturing a secondary battery cathode material, comprising:
preparing Li₂O powder by separating CO₂ from Li₂CO₃ powder;
forming a mixed powder by mixing the Li₂O powder with nickel-cobalt-manganese (NCM) precursor powder; and
firing the mixed powder using a rotary kiln.

2. The method of claim 1, wherein:
the preparing of the Li₂O powder includes:
charging the Li₂CO₃ powder into a firing furnace in a high-temperature atmosphere of 400°C to 800°C; and
separating the CO₂ from the Li₂CO₃ powder by supplying air or oxygen into the firing furnace.

3. The method of claim 1, wherein:
the forming of the mixed powder includes:
pulverizing the Li₂O powder; and
mixing the Li₂O powder with the NCM precursor powder; and
forming the mixed powder in a form of granules or briquettes.

4. The method of claim 1, wherein:
the forming of the mixed powder may be performed in a closed space in a nitrogen atmosphere.

5. The method of claim 1, wherein:
the firing of the mixed powder using the rotary kiln includes:
charging the mixed powder into an inside of the rotary kiln in a high-temperature atmosphere of 400°C to 1000°C in which a refractory coating layer is formed on an inner surface of the rotary kiln and a spiral baffle is installed in the rotary kiln; and
firing the mixed powder inside the rotary kiln.

## Patentansprüche

1. Verfahren zur Herstellung eines Sekundärbatterie-Kathodenmaterials, umfassend:
Vorbereiten von Li₂O-Pulver durch Abscheiden von CO₂ aus Li₂CO₃-Pulver;
Bilden eine Pulvermischung durch Mischen des Li₂O-Pulvers mit Nickel-Kobalt-Mangan (NCM)-Vorläuferpulver; und
Brennen der Pulvermischung in einem Drehrohrofen.

2. Verfahren nach Anspruch 1, wobei:
das Vorbereiten des Li₂O-Pulvers Folgendes beinhaltet:
Einfüllen des Li₂CO₃-Pulvers in einen Brennofen in einer Hochtemperaturatmosphäre von 400°C bis 800 °C; und
Abscheiden des CO₂ aus dem Li₂CO₃-Pulver durch Einleiten von Luft oder Sauerstoff in den Brennofen.

3. Verfahren nach Anspruch 1, wobei:
das Bilden der Pulvermischung Folgendes beinhaltet:
Pulverisieren des Li₂O-Pulvers; und
Mischen des Li₂O-Pulvers mit dem NCM-Vorläuferpulver; und
Bilden der Pulvermischung in Form von Granulat oder Briketts.

4. Verfahren nach Anspruch 1, wobei:
das Formen der Pulvermischung in einem geschlossenen Raum unter Stickstoffatmosphäre erfolgen kann.

5. Verfahren nach Anspruch 1, wobei:
das Brennen der Pulvermischung unter Verwendung eines Drehrohrofens Folgendes beinhaltet:
Einfüllen der Pulvermischung in einen Innenraum des Drehrohrofens in einer Hochtemperaturatmosphäre von 400°C bis 1000°C, wobei an der Innenfläche des Drehrohrofens eine feuerfeste Beschichtung ausgebildet ist und in dem Drehrohrofen eine spiralförmige Leitwand installiert ist; und
Brennen der Pulvermischung im Innenraum des Drehrohrofen.

## Revendications

1. Procédé de fabrication d'un matériau de cathode pour batterie secondaire, comprenant :
la préparation d'une poudre de Li₂O par séparation de CO₂ vis-à-vis d'une poudre de Li₂CO₃ ;
la formation d'une poudre mélangée par mélange de la poudre de Li₂O avec une poudre de précurseur de nickel-cobalt-manganèse (NCM) ; et
la calcination de la poudre mélangée au moyen d'un four rotatif.

2. Procédé selon la revendication 1, dans lequel :
la préparation de la poudre de Li₂O inclut :
le chargement de la poudre de Li₂CO₃ à l'intérieur d'un four de calcination dans une atmosphère à haute température de 400 °C à 800 °C ; et
la séparation du CO₂ vis-à-vis de la poudre de Li₂CO₃ par introduction d'air ou d'oxygène à l'intérieur du four de calcination.

3. Procédé selon la revendication 1, dans lequel :
la formation de la poudre mélangée inclut :
la pulvérisation de la poudre de Li₂O ; et
le mélange de la poudre de Li₂O avec la poudre de précurseur de NCM ; et
la formation de la poudre mélangée sous la forme de granulés ou de briquettes.

4. Procédé selon la revendication 1, dans lequel :
la formation de la poudre mélangée peut être effectuée dans un espace fermé sous atmosphère d'azote.

5. Procédé selon la revendication 1, dans lequel :
la calcination de la poudre mélangée au moyen du four rotatif inclut :
le chargement de la poudre mélangée à l'intérieur du four rotatif dans une atmosphère à haute température de 400 °C à 1000 °C, dans lequel une couche de revêtement réfractaire est formée sur une surface interne du four rotatif et un déflecteur en spirale est installé dans le four rotatif ; et
la calcination de la poudre mélangée à l'intérieur du four rotatif.
